# EUROPEAN PATENT APPLICATION

(11) **EP 3 913 555 A1**
(43) Date of publication of application: **24.11.2021**
(21) Application number: 19910803.6
(22) Date of filing: 15.10.2019
(51) Int. Cl.: G06Q 10/04, G06Q 50/06

(54) **POWER DISTRIBUTION NETWORK OPERATION AIDED DECISION-MAKING ANALYSIS SYSTEM AND METHOD**

(30) Priority: 14.01.2019 CN 201910029735
(71) Applicant: China Electric Power Research Institute Company Limited, Beijing 100192 (CN); State Grid Corporation of China, Beijing 100031 (CN)
(72) Inventor: LIU, Keyan, Beijing 100192 (CN); SHENG, Wanxing, Beijing 100192 (CN); ZHANG, Wen, Beijing 100192 (CN); MENG, Xiaoli, Beijing 100192 (CN); DIAO, Yinglong, Beijing 100192 (CN); JIA, Dongli, Beijing 100192 (CN); DONG, Weijie, Beijing 100192 (CN); HU, Lijuan, Beijing 100192 (CN)
(74) Representative: Neusser, Sebastian
(86) International application number: PCT/CN2019/111165
(87) International publication number: WO 2020/147349

(57) **Abstract**

Provided is a power distribution network operation aided decision-making analysis system and method. The system includes a data layer, a platform layer, and an application layer. The data layer is configured to classify and store data acquired from external. The platform layer is configured to build multiple operation modules according to data types of the data classified and stored by the data layer. The application layer is configured to perform a risk analysis on a power distribution network and provide an optimization solution for a risk control measure according to the multiple operation modules built by the platform layer and the data classified and stored by the data layer and is further configured to display operation result information of the multiple operation modules.

## Description

This application claims priority to Chinese Patent Application No. 201910029735.X filed with the CNIPA on Jan. 14, 2019, the disclosure of which is incorporated herein by reference in its entirety.

### TECHNICAL FIELD

The present application relates to the technical field of urban power distribution network operation simulation, for example, to a power distribution network operation aided decision-making analysis system and method.

### BACKGROUND

With the popularization and application of application systems such as a power distribution automation system and an electricity consumption information collection system, an exponentially increasing amount of heterogeneous, high-dimensional and polymorphic data is generated in a power distribution network. Due to the relatively late start of the informatization of the power distribution network and the relatively poor data quality, data types, and perfectness of the data, it is necessary to investigate and analyze the relevant information system of the power distribution network and perform data preprocessing based on reliable data information of the power distribution network. How to flexibly apply the big data general method in the information field to the big data analysis of the power distribution network, to achieve the accurate prediction of faults of the power distribution network and the scanning of potential risks, and to find and improve the weak links have become an urgent problem to be solved.

The operation and maintenance of the power distribution network is a complex system project, which has the characteristics of large scale, many uncertain factors, and covering a wide range of fields. The operation and maintenance means in the related art cannot satisfy the requirements. The relevant personnel not only need to collect the historical data of the development of the target power distribution network, fully analyze the characteristics of the power distribution network, and conduct an in-depth study, but also need to have a relatively comprehensive understanding of the operation health status of the power distribution network and the weak links of the power distribution service. To effectively improve the operation monitoring and control capabilities of the power distribution network, to quickly achieve the observability and controllability of the power distribution network, to change the "passive repair report" to "active monitoring and control", to shorten the fault recovery time, and to improve the service level, a computer operation simulation aided decision-making system has become an indispensable tool for the planning and construction of the urban power distribution network. Related commercial software applied to the operation and maintenance and the management and control of the power distribution network are as follows: power system analysis synthesis program (PSASP), Bonneville Power Administration (BPA), power system simulator/engineering (PSS/E), electrical transient analysis program (ETAP), power system analysis package (PSAPAC), digital simulation and electrical network (DigSilent), and network torsion machine control (NETOMAC). Although these software provide favorable tools for the simulation calculation and analysis of the power distribution network, these software are not directly aimed at the operation and maintenance of the power distribution network.

A large number of distributed power sources, microgrids, large-capacity chargers, and energy storage systems are accessed to the power distribution network so that the power distribution network transforms from a traditional passive power distribution network to an active power distribution network that is more active. The active power distribution network has the characteristics of a complex topological structure, a flexible operation manner, two-way variability of the power flow, and uncertainty of the output so that a large difference exists between the fault characteristics of the active power distribution network and the traditional power distribution network, the weak characteristics and high-frequency transient characteristics of the faults of the power distribution network are becoming more apparent, and the difficulty of fault diagnosis and processing of the power distribution network increases. In this manner, the performance of relay protection and fault diagnosis of the power distribution network in the related art is reduced, maloperation and misjudgment easily occur, and the safe operation of the power distribution network is seriously threatened.

### SUMMARY

The present application provides a power distribution network operation aided decision-making analysis system and method.

In an embodiment, embodiments of the present application provide a power distribution network operation aided decision-making analysis system. The system includes a data layer, a platform layer, and an application layer.

The data layer is configured to classify and store acquired external data.

The platform layer is configured to build multiple operation modules according to data types of the data classified and stored by the data layer.

The application layer is configured to perform a risk analysis on a power distribution network and to provide an optimization solution for a risk control measure according to the multiple operation modules built by the platform layer and the data classified and stored by the data layer and is further configured to display operation result information of the multiple operation modules.

In an embodiment, embodiments of the present application provide a power distribution network operation aided decision-making analysis method. The method includes the steps described below.

A data layer classifies and stores data acquired from external.

A platform layer builds multiple operation modules based on data types of the data classified and stored by the data layer.

An application layer performs a risk analysis on a power distribution network and provides an optimization solution for a risk control measure according to the multiple operation modules built by the platform layer and the data classified and stored by the data layer and displays operation result information of the multiple operation modules.

### BRIEF DESCRIPTION OF DRAWINGS

FIG. 1 is an architecture diagram of a power distribution network operation aided decision-making analysis system according to an embodiment of the present application;
FIG. 2 is a structure diagram of data integration of a power distribution network information system according to an embodiment of the present application;
FIG. 3 is a structure diagram of data integration with an OMS/SCADA system according to an embodiment of the present application;
FIG. 4 is a flowchart of implementing system function according to an embodiment of the present application;
FIG. 5 is a flowchart of data management of the power distribution network information system according to an embodiment of the present application;
FIG. 6 is a flowchart of implementing risk scanning according to an embodiment of the present application;
FIG. 7 is a flowchart of implementing fault simulation according to an embodiment of the present application;
FIG. 8 is a flowchart of a fault prediction based on machine learning according to an embodiment of the present application; and
FIG. 9 is a flowchart of a power distribution network operation aided decision-making analysis method according to an embodiment of the present application.

### DETAILED DESCRIPTION

To better understand the present application, the content of the present application will be further described below in conjunction with drawings and examples of the specification.

### Embodiment one

The present application provides an intelligent power distribution network operation aided decision-making analysis system and method. The system adopts a system of a 3-layer technical architecture and a system functional architecture, covers a data management module, a risk scanning module, a fault simulation module, a network architecture optimization module, a system configuration module, and a monthly report analysis module, achieves a differentiated simulation analysis of the target power distribution network, and supports the efficient and accurate operation and maintenance of the power distribution network. The system technical architecture and functional architecture design instructions are described below.

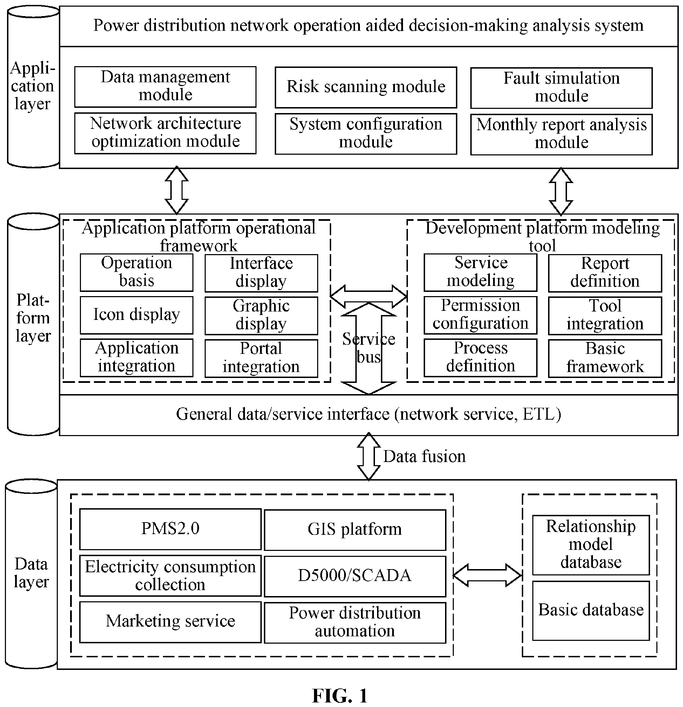

The technical architecture configuration of the power distribution network operation aided decision-making analysis system is shown in FIG. 1.

A data layer is configured to classify and store data acquired from external.

A platform layer is configured to build multiple operation modules according data types of the data classified and stored by the data layer.

An application layer is configured to perform a risk analysis on the power distribution network and provide an optimization solution for a risk control measure according to the multiple operation modules built by the platform layer and the data classified and stored by the data layer and is further configured to display operation result information of the multiple operation modules.

The data layer performs an in-depth analysis of the data type, format, and specification of multiple to-be-accessed external systems such as a power production management system (PMS) 2.0, an electricity consumption information collection system, a geographic information system (GIS) platform, a D5000/supervisory control and data acquisition (SCADA) system, and a power distribution automation system and performs an in-depth integration of operation and maintenance aided decision-making data such as power grid fault data, operation data, meteorological information data, and geographic information data through manners such as data integration, data cleaning, and data mining according to the actual requirements of the operation simulation of the power distribution network so that serial collection of a multi-service data system is achieved. This layer is formed by a graph library and an attribute database, is stored in an Oracle database or an Acess database, and provides a basic support system and basic general data service, data persistence, and database access capabilities for the platform layer to call.

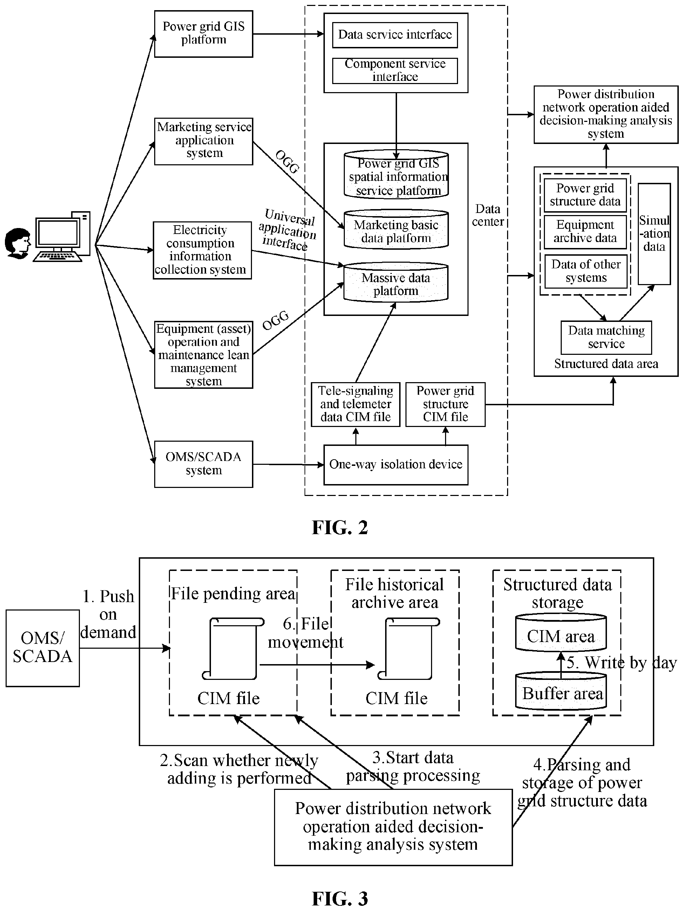

For the data integration part, the implementation process of data integration of the power distribution network operation aided decision-making analysis system and part of a power distribution network information system is shown in FIG. 2.

### (1) Integration with marketing service application data

The data integration requirements of the power distribution network operation aided decision-making analysis system and a marketing service application system include the integration of archive information such as an organization, a standard code, a customer, a metering point, metering, a court, and a power distribution transformer as well as the integration of information such as a distribution network equipment relationship. Through an analysis of elements such as the transmission data volume and transmission frequency required for integration with data of a marketing professional system, the technology of a marketing basic data platform is adopted for the power distribution network operation aided decision-making analysis system and the provincial (city) level horizontal integrated data requirements.

Provincial marketing service application data is copied to a provincial marketing basic data platform through manners such as a concept and mechanism (Oracle Golden Gate, OGG). The power distribution network operation aided decision-making analysis system acquires data from a data center of the marketing basic data platform. In the case where a user, a metering point, a metering attribute, a metering box, and the relationship between the metering box and the metering point are added, changed, or deleted, the marketing basic data platform performs data processing from the marketing service application system through the OGG manner as needed, and the power distribution network operation aided decision-making analysis system calls current up-to-date detailed data through a Java DataBase Connectivity (JDBC) manner according to the update time.

### (2) Integration with data of an electricity consumption information collection system

The data integration requirements of the power distribution network operation aided decision-making analysis system and the electricity consumption information collection system include the integration of information such as a 96-point current, a voltage, power, a power factor, and other curve data. The electricity consumption information collection system writes information such as a bottom indication of an electric energy meter and power data into a massive data platform through a standard interface manner of a massive platform, and the provincial company deploys a calculation service module of the power distribution network operation aided decision-making analysis system and extracts the bottom indication for calculation through the standard interface manner of the massive platform.

### (3) Integration with data of an equipment (asset) operation and maintenance lean management system

The data integration requirements of the power distribution network operation aided decision-making analysis system and the equipment (asset) operation and maintenance lean management system include the integration of information such as a standard code, an organization, an equipment archive and parameter, an archive relationship, a maintenance plan, and a defect. Through an analysis of elements such as the transmission data volume and transmission frequency required for integration with data of an operation and inspection professional system, the technology of a data center is adopted for the power distribution network operation aided decision-making analysis system and the provincial (city) level horizontal integrated data requirements. The equipment (asset) operation and maintenance lean management system pushes a power transmission part, a power distribution part, a low voltage part, and power system nameplate operation library information to a provincial data center, and the power distribution network operation aided decision-making analysis system extracts power grid topology and equipment ledger information required by the system through an Extract-Transform-Load (ETL) manner.

### (4) Integration with data of a power grid GIS platform

The data integration requirements of the power distribution network operation aided decision-making analysis system and an integrated GIS system include the integration of information such as the "station - line - transformer - access point - metering box" marketing and distribution connection relationship, data may be accessed in two manners of a timed manner and an instant manner, and the power distribution network operation aided decision-making analysis system needs the integrated GIS system to provide application services such as a basic map, power grid equipment management, thematic map display, and power grid flow diagram display.
1) Integration of marketing and distribution connection data: a corresponding relationship between low-voltage users and the terminal equipment (access point) of the power grid is established with low-voltage metering boxes as an integration point, and a corresponding relationship between high-voltage users and the terminal equipment of the power grid is established with the combination of electricity account numbers, power sources (distributed power sources), and metering points as an integration point. The information of the power grid equipment above the integration point such as a substation, lines, a public transformer, and low-voltage lines is subject to the GIS system; the archive information of medium-voltage users and low-voltage users at the integration point and below the integration point is subject to a marketing system. The power distribution network operation aided decision-making analysis system achieves the data acquisition of high-voltage private transformer user mapping, public transformer (power distribution room) mapping, and mapping between low voltage metering box and access point by calling an operation and distribution connection data interface service provided by the power grid GIS platform.
2) Business application service integration: the power distribution network operation aided decision-making analysis system achieves the related service applications by calling multiple types of power grid spatial information services (a power grid graphic browsing service, a power grid graphic query and positioning service, and a power grid analysis service) provided by the power grid GIS platform.

The applications of the power grid GIS platform in the power distribution network operation aided decision-making analysis system include a basic map, power grid equipment management, thematic map display, and power grid flow diagram display.

### 1) Providing the basic map

The power grid GIS platform provides basic map data and power-related layer data (such as a diagram of a power grid architecture structure). At the same time, the power grid GIS platform further provides basic graphic operation functions such as zooming in, zooming out, roaming, front and rear view, full image, highlight display, clearing highlight display, and the eagle eye function. A graphic element hotspot and event triggering function may also be provided.

### 2) Power grid equipment management

Through the integration with a GIS function, the equipment positioning of equipment such as a transformer, lines, a public transformer, a private transformer, and a user on an equipment tree and selecting query in a pull-up frame on the map to query power grid resource information are achieved so that more convenient, clear, and visual management and query of power grid equipment are achieved.

### 3) Thematic map display

The thematic map display is a function of the power grid GIS platform, which may be used for viewing and acquiring thematic maps such as a primary wiring diagram, a sectional diagram of a buried cable, a system diagram, a single-line diagram, a sectional diagram of a cable well, and a buffer area generation diagram in the station.

### 4) Power grid flow diagram display

The power grid GIS platform provides a power grid architecture diagram, a graphic element hotspot and triggering function, and a graphic element coordinate position so that a secondary development interface of a power grid flow diagram display function.

### (5) Integration with data of an outage management system (OMS)/SCADA system

The system integrates the power grid equipment and topology information within the jurisdiction of the prefectural and municipal companies and the gateway in the power plant, the control center generates a common information model/exchange (CIM/E) or extensible markup language (XML) file format (the CIM/E format is preferred), and the provincial data center is responsible for data parsing. The data integration structure with an OMS/SCADA system is shown in FIG. 3.

In the case where a power grid structure model is newly added, the control center generates a CIM/E or XML power grid structure model file corresponding to the newly added power grid structure model. The data center starts a power grid structure data access service in a timed manner and calls a CIM/E or XML power grid structure model parsing service deployed by the power distribution network operation aided decision-making analysis system to start a data parsing operation. In the case where the power distribution network operation aided decision-making analysis system parses power grid structure data, the power distribution network operation aided decision-making analysis system scans a file-sharing area, starts to parse the newly added CIM/E or XML model file, and writes analysis result data into a BUFFER area of a structured data area of the data center through a JDBC manner. After the processing is completed, the original CIM/E or XML power grid structure model file is moved to a processed area. The data center writes data in the BUFFER area into a common information model (CIM) area every day in a timed manner so that the data in the BUFFER area is shared by the power distribution network operation aided decision-making analysis system and other systems.

In the case where the power grid structure model is changed, the control center regenerates the corresponding CIM/E or XML power grid structure model file for sharing. Before data is written into the BUFFER area, the newly added processing operation is consistent, except that the data is updated according to a key field of the table when data is written into a CIM area.

The platform layer accesses external system data from the data layer through a general data/service interface by using technologies such as Webservice and ETL. This layer is formed through operation framework construction and development platform modeling and includes open source components of platforms such as workflow, transaction processing, and safety systems. Application platform operation frameworks include an operation basic framework, an interface display framework, an icon display framework, and an application integration framework. Development platform modeling tools include service modeling, report definition, and permission configuration.

As for the application layer, the bottom layer uses programming languages such as Java, C, and C++. Based on an Echatrs chart library, a front-end data visualization design is performed. Six modules such as a data management module, a risk scanning module, a fault simulation module, a network architecture optimization module, a system configuration module, and a monthly report analysis module exist, and charts display, report display, and topological map display are provided so that interactive use by users of multi-level units and departments is achieved.

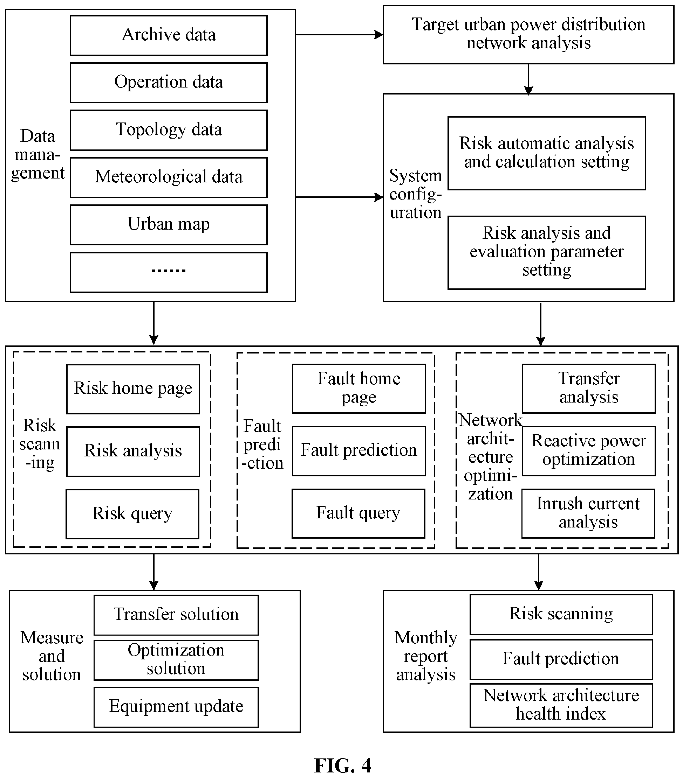

The function of the power distribution network operation aided decision-making analysis system is embodied by six modules of the application layer, and the system functional architecture is shown in FIG. 4. The system covers service modules such as a data management module, a risk scanning module, a fault simulation module, a network architecture optimization module, a system configuration module, and a monthly report analysis module. The data management module is configured to achieve data integration, data query, data quality evaluation and analysis, and data processing. The risk scanning module is configured to achieve the batch scanning of risks of the power distribution network and a weak point analysis, risk source statistics and rating, and a risk early warning. The fault simulation module is configured to achieve functions such as a fault prediction, multiple fault simulation, and emergency maintenance decision-making aided decision-making based on the expansion of a fault analysis function in the current advanced applications of power distribution automation. The network architecture optimization module is configured to perform operational evaluations such as an inrush current analysis, protection setting check, a power supply capacity analysis, a voltage quality evaluation, a loop closure analysis, an unlooping analysis, a transfer analysis, and reactive power optimization and form a transfer solution, an optimization solution, and an equipment update solution with the smallest load loss as a goal and with power grid operation safety and voltage quality as constraints. The system configuration module is configured to complete risk automatic analysis and calculation setting and risk analysis and evaluation parameter setting. The monthly report analysis module is configured to complete a query, generation, and editing of a risk monthly report, a fault monthly report, and a network architecture monthly report.

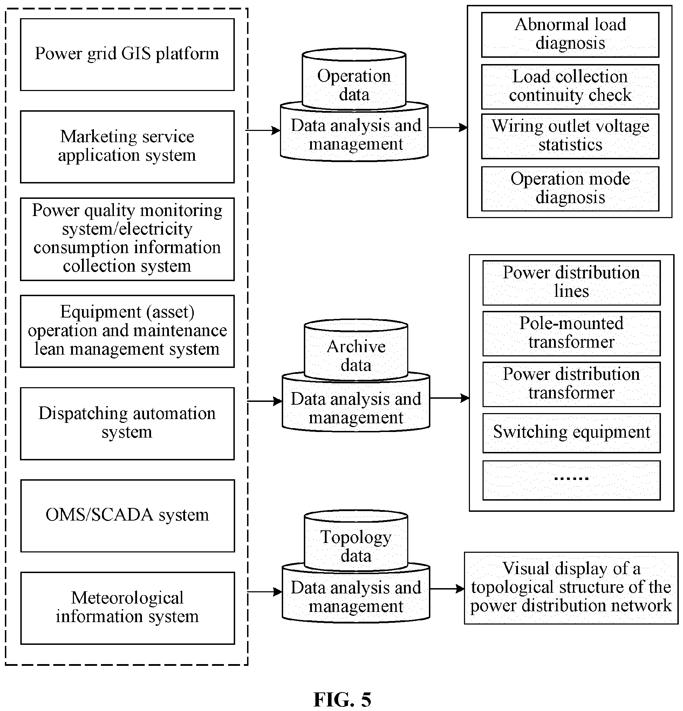

As for the data management part, data management achieves data integration, data processing, data query, and data quality evaluation and analysis. The implementation process of data management of the power distribution network information system is shown in FIG. 5.
(1) Data access refers to data access management of PMS data, the GIS platform, a power quality monitoring system/electricity consumption information collection system, a dispatching automation system, the OMS/SCADA system, a meteorological system, and the marketing service application system.
(2) Data management refers to the analysis and management of archive data, operation data, and topology data. Data management includes data quality analysis and management of file data of equipment such as power distribution lines, a pole-mounted transformer, a power distribution transformer, switching equipment, a switching station, and a ring main unit; data quality analysis and management of operation data and completion of an abnormal load diagnosis, load collection continuity check, wiring outlet voltage statistics, and an operation mode diagnosis; and data quality analysis and management of topology data and achievement of the visual display of a topological structure of the distribution network.

As for the risk scanning part, the module interface design includes a risk home page, a risk analysis, and a risk query.
(1) The risk home page refers to displaying a risk situation in the form of a risk indicator and a risk map. The risk home page includes a risk block diagram, an overall indicator, a regional risk proportion, a risk ranking, historical statistics, a future trend, a maintenance condition, and a rolling reminder of the risk. The display of the map includes the classification of areas, power plants, feeders, and courts, the display of risk information according to changes in time, and a risk early warning for a risk heat map.
(2) The risk analysis includes risk calculation scanning range setting, risk calculation maintenance plan setting, risk calculation meteorological information setting, risk calculation load parameter setting, regional risk result information, power plant risk result information, feeder risk result information, court risk result information, risk early warning information, and risk measure information.
(3) The risk query refers to the query of risk indicators and measures based on dimensions such as an area, a power plant, a feeder, a court, equipment, a risk type, and time.

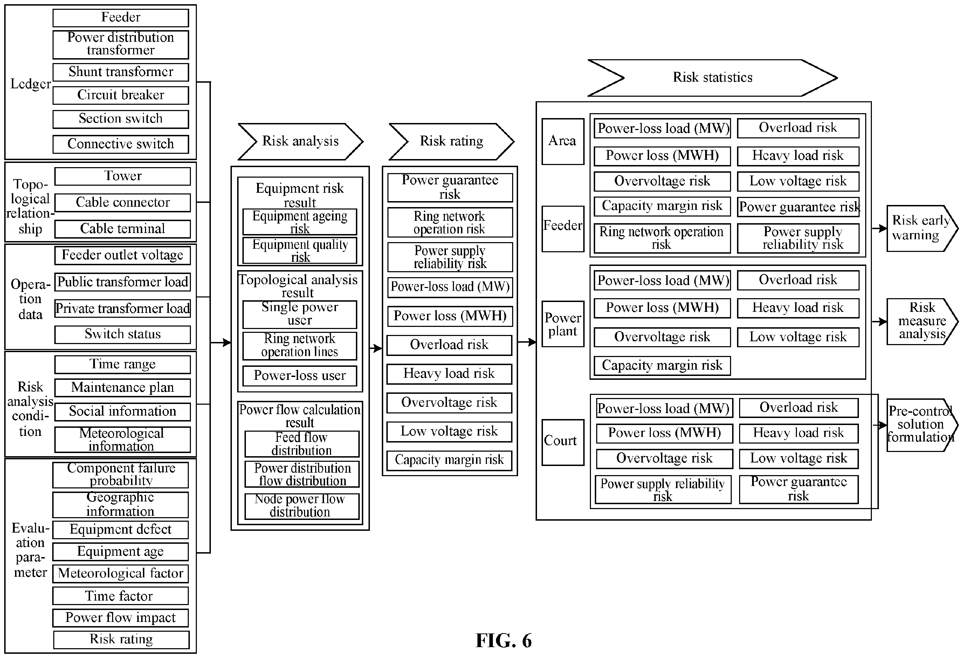

As for the risk scanning module, through risk scanning, the batch scanning of risks of the power distribution network and a weak point analysis, and a risk rating and early warning are achieved. The implementation process of the risk scanning module is shown in FIG. 6.

Based on ledger data, a topological relationship, meteorological information, and operation data of the power distribution network, the risk impact factor of the power distribution network is analyzed, the risk is configured according to meteorology, maintenance, a load, and a range, and the risk target locking and network model construction are completed; calculation of risk indicators and risk rating, risk range fitting, and risk dynamic deduction for an area, a power plant, a feeder, and a court are achieved by using power flow calculation and a topological analysis; multiple types of risk early warnings in the levels of an area, a power plant, a feeder, and a court are achieved, corresponding risk control measures for an overload risk, an overvoltage risk, a low voltage risk, a load loss risk, a ring network operation risk, a heavy load risk, and a power guarantee risk are provided, and the corresponding risk control measures include an unlooping solution, a transfer solution, a loop closure solution, and a reactive power optimization solution; important support is provided for the formulation of an emergency transfer solution and an optimization solution for the power distribution network.

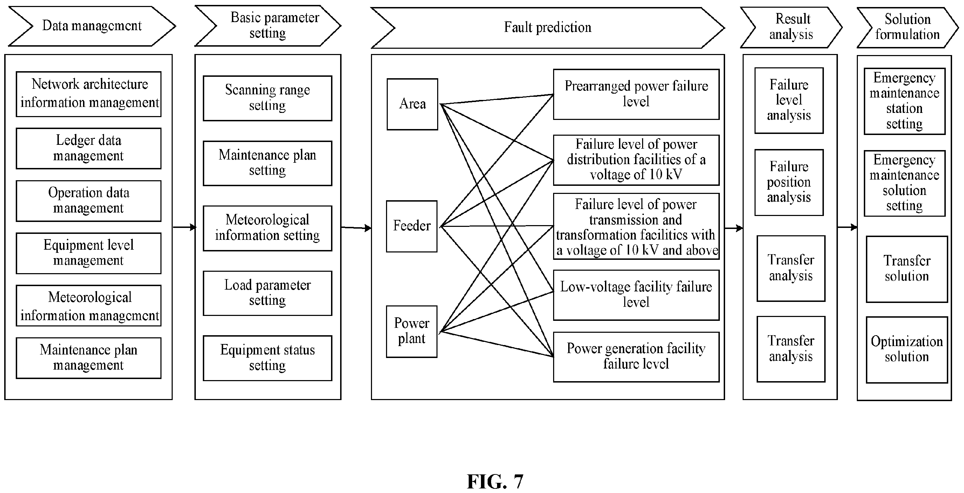

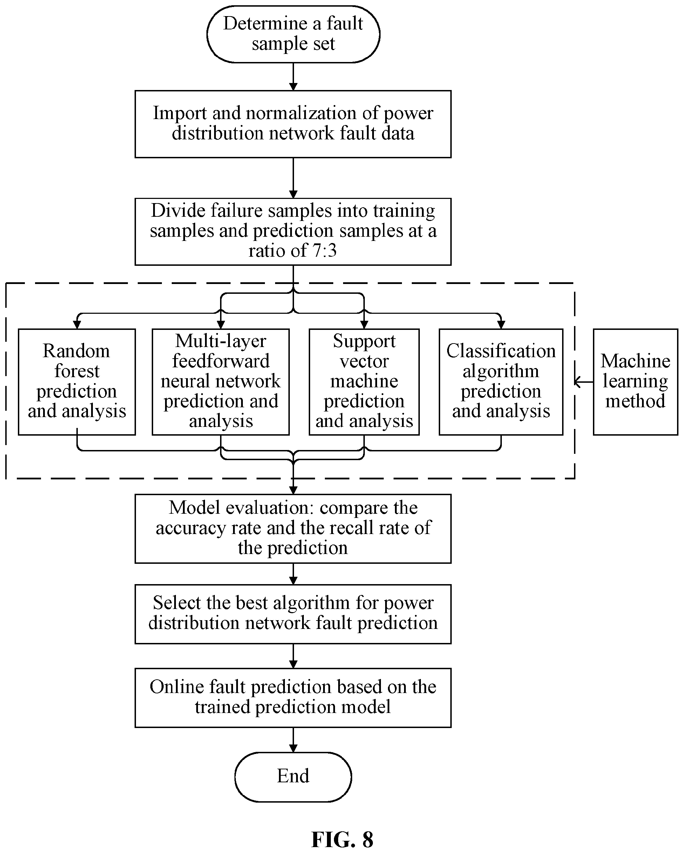

As for the fault simulation module, the home page of the fault simulation module displays multiple indicators in a fault prediction process and result. The multiple indicators include a fault block diagram, a key power failure area, an overall indicator, a fault area condition, historical statistics, a future trend, a fault level, and a power failure. This module is based on the expansion of the fault analysis function in the current advanced application of power distribution automation, performs fault settings according to meteorology, maintenance, a load, a range, and an equipment status; performs a power failure cause analysis, a power failure range analysis, and a power failure level analysis; calculates the fault level of multiple faults of an area, a power plant, and a feeder; performs a fault level analysis, a fault position analysis, a transfer analysis, and an optimization analysis on the result; and achieves functions such as a fault prediction, multiple fault simulations, and emergency maintenance decision-making aided decision-making. The design process of the fault simulation module is shown in FIG. 7.
(1) As for the data management stage, pre-processes such as data integration, cleaning, and outlier sample removal are performed on the collected load data, ledger data, meteorological data, and fault data of the power distribution network, and data that may be related to faults of the power distribution network is analyzed.
(2) As for the basic parameter setting stage, a scanning range, a maintenance plan, meteorological information, a load parameter, and equipment parameter settings are performed, a fault prediction range and the required fault feature set of the power distribution network are selected, the basis for a fault level classification of the power distribution network is determined, and faults are classified into levels. Based on the feature selection algorithm in data mining, the fault feature weight calculation and sorting are performed, the features with strong classification ability are selected, and the optimal fault feature set is obtained.
(3) As for the failure prediction stage, based on the machine learning method, the fault prediction of the power distribution network is performed. The specific implementation process is shown in FIG. 8. A fault sample set of the power distribution network is determined and imported, and the sample data is "normalized" for dimensionalization; the fault sample data is split randomly at a ratio of 7:3, 70% of the data is used for the training model, and 30% of the data is used for prediction; classification algorithms such as random forest, neural network, support vector machine, and integrated learning in machine learning are selected for the prediction of faults of the power distribution network; the accuracy rate and the recall rate of the prediction are compared so that the algorithm training model generating the best effect is determined for online prediction of faults of the power distribution network.
(4) As for the fault analysis and plan formulation stage, General fault types and complex multiple fault types are configured on the bus or lines. According to the configured fault object and fault types, the minimum range of fault influence is analyzed, the boundary circuit breaker that changes the fault influence range is transformed from operation to disconnection, the transfer analysis is started, a fault recovery solution is analyzed, the risk of each recovery is calculated, all the recovery solutions are sorted, and fault simulation and deduction are achieved.

As for the network architecture optimization part, operational evaluations such as an inrush current analysis, protection setting check, a power supply capacity analysis, a voltage quality evaluation, a loop closure analysis, an unlooping analysis, a transfer analysis, and reactive power optimization are performed with the smallest load loss as a goal and with power grid operation safety and voltage quality as constraints.
(1) The transfer analysis refers to setting up heavy load, maintenance, or fault lines, searching for all transfer solutions according to the transfer solution search method, and displaying the transfer solutions in a list.
(2) Reactive power optimization refers to according to the overvoltage risk and the low voltage risk, automatically analyzing a node that needs reactive power compensation optimization and calculating the reactive power compensation input amount at the reactive power compensation optimization node.

As for the system configuration, the system configuration module completes risk automatic analysis and calculation setting and risk analysis and evaluation parameter setting.
(1) Risk automatic analysis settings include a calculation time interval, settings of the heavy load upper and lower limits of a transformer and lines, and settings of the voltage upper and lower limits of multiple voltage levels.
(2) The risk analysis and evaluation parameters are configured to include a component failure probability parameter, a power flow impact factor library, a meteorological impact factor, a geographic impact factor, a time impact factor, an equipment defect impact factor, an equipment age impact factor, a risk classification threshold value, and a risk measure library.

As for the monthly report analysis part, the monthly report analysis module is configured to complete a query, generation, and editing of a risk monthly report, a fault monthly report, and a network architecture monthly report.
(1) Through a risk scanning report, the query, generation, and editing of the risk monthly report are completed, and online display, import, and export of a hyper text markup language (html) and automatic distribution by a mailbox may be achieved.
(2) Through a fault prediction report, the query, generation, and editing of the fault monthly report are completed, and online display, import, and export of an html and automatic distribution by a mailbox may be achieved.
(3) Through a network architecture health index report, the query, generation, and editing of the network architecture monthly report are completed, and online display, import, and export of an html and automatic distribution by a mailbox may be achieved.

In an embodiment, the data layer includes an acquisition module, a data integration module, and a data storage module.

The acquisition module is configured to acquire data of PMS 2.0, a power grid GIS platform, a marketing service application system, an electricity consumption information collection system, an equipment operation and maintenance lean management system, an OMS/SCADA system, and power distribution network automation.

The data integration module is configured to integrate the data acquired by the acquisition module into operation data, archive data, ledger data, simulation data, and topology data according to data types.

The data storage module is configured to store the data acquired by the acquisition module in data platforms corresponding to multiple data types according to the data types of the data; and is further configured to store the data integrated by the data integration module according to the multiple data types in a database.

In an embodiment, the data integration module is configured to perform the operations described below.

Data of a marketing basic data platform, a massive data platform, and a power grid GIS platform is integrated into the operation data, the archive data, the ledger data, the simulation data, and the topology data.

The data acquired through the marketing service application system is stored in the marketing basic data platform; the data acquired through the electricity consumption information collection system, the equipment operation and maintenance lean management system, and the OMS/SCADA system are stored in the massive data platform.

In an embodiment, the data storage module includes a marketing service application system data storage unit, an electricity consumption information collection system data storage unit, an equipment operation and maintenance lean management system data storage unit, a power grid GIS platform data storage unit, and an OMS/SCADA system data storage unit.

The marketing service application system data storage unit is configured to update a user, a metering point, a metering attribute, and a metering box of the marketing service application system corresponding to the acquired data of the marketing service application system to a marketing basic data platform in real time through an OGG manner.

The electricity consumption information collection system data storage unit is configured to store a bottom indication of an electric energy meter and power data of the electricity consumption information collection system in a massive data platform through a standard interface manner of a massive platform.

The equipment operation and maintenance lean management system data storage unit is configured to store a standard code, an organization, an equipment archive and parameter, an archive relationship, a maintenance plan, and defect information of the equipment operation and maintenance lean management system in the massive data platform through a technical route of a data center.

The power grid GIS platform data storage unit is configured to store power grid spatial information service data of the power grid GIS platform in a power grid GIS data platform in a timed or instant manner.

The OMS/SCADA system data storage unit is configured to convert the data of the OMS/SCADA system into a CIM/E or XML file format and store the CIM/E or XML file format in the massive data platform.

In an embodiment, the OMS/SCADA system data storage unit is further configured to perform the operations described below.

In the case where the OMS/SCADA system has newly added power grid structure data, the newly added data is converted into a power grid structure file in the CIM/E or XML file format.

The newly added power grid structure file is parsed and parsed data is stored in the massive data platform.

In an embodiment, the data storage module further includes an integrated data storage unit.

The integrated data storage unit is configured to store the operation data, the archive data, the ledger data, the simulation data, and the topology data in the database.

In an embodiment, the database includes an Oracle database, a db database, an SAL database, and an Acess database.

In an embodiment, the platform layer includes a general data/service interface module, an application platform operation module, and a development platform modeling tool module.

The general data/service interface module is configured to acquire and store the data from a database according to the data type and provide the data to the application platform operation module and the development platform modeling tool module through a service bus.

The application platform operation module is configured to provide an operation framework, an icon, and a data classification integration framework and instruction of the data layer for multiple models of the application layer.

The development platform modeling tool module is configured to model the application layer, to configure a permission of power grid equipment, and to define a report of a topological structure of the power distribution network based on the data classified and stored by the data layer according to the data types of the data.

In an embodiment, the general data/service interface module includes an acquisition unit and a transmission unit.

The acquisition unit is configured to acquire current latest marketing data through a JDBC manner, to acquire a bottom indication of an electric energy meter and power data through a standard interface manner of a massive platform, to acquire power grid topology and equipment ledger information through an ETL manner, and to acquire data of a power grid GIS, data of an OMS/SCADA system, and data in the database.

The transmission unit is configured to transmit a data classification integration instruction of the application platform operation module to the data layer.

In an embodiment, the application layer includes a data management module, a risk scanning module, a fault simulation module, a network architecture optimization module, a system configuration module, and a monthly report analysis module.

The data management module is configured to analyze and manage the archive data, the operation data, and the topology data of the data integration module and provide a visual display of data of a topological structure of the power distribution network.

The risk scanning module is configured to scan risks and faults for the power distribution network, to lock a risk target, and to deduce the risk target according to the ledger data, the topology data, and the operation data of the data integration module; and is further configured to provide a risk early warning and a risk control measure corresponding to the risk early warning.

The fault simulation module is configured to set a risk scanning range, a maintenance plan, meteorological information, a load parameter, and an equipment status according to the simulation data of the data integration module; and is further configured to perform a risk prediction according to the risk target of the risk scanning module, to analyze a prediction result, and to formulate the optimization solution for the risk control measure.

The network architecture optimization module is configured to calculate and evaluate a risk measure of the risk scanning module and the optimization solution of the fault simulation module with the smallest load loss as a goal and with power grid operation safety and voltage quality as constraints.

The system configuration module is configured to configure a calculation time interval of the risks of the power distribution network, a transformer, an upper limit and a lower limit of a line heavy load, and an upper voltage limit and a lower voltage limit corresponding to multiple voltage levels; and is further configured to set a component failure probability parameter, a power flow impact factor library, a meteorological impact factor, a geographic impact factor, a time impact factor, an equipment defect impact factor, an equipment age impact factor, a risk classification threshold value, and the risk measure.

The monthly report analysis module is configured to, according to a result of the risk scanning module, a fault prediction module, and the network architecture optimization module and data of the data layer, complete querying, generating, and editing for a risk scanning monthly report, a fault prediction monthly report, and a network architecture optimization monthly report and complete online displaying in HTML language, importing, and exporting and automatically distributing via mail for the risk scanning monthly report, the fault prediction monthly report, and the network architecture optimization monthly report.

In an embodiment, the fault simulation module includes a sample data unit, a prediction unit, and a selection unit.

The sample data unit is configured to split fault data of the data layer into training data and prediction data according to a preset ratio.

The prediction unit is configured to train a random forest model, a neural network model, a support vector machine model, and an integrated learning model by using the training data and detect the random forest model, the neural network model, the support vector machine model, and the integrated learning model by using the prediction data.

The selection unit is configured to select an optimal model among the random forest model, the neural network model, the support vector machine model, and the integrated learning model and perform online prediction on the faults of the power distribution network. In an embodiment, the optimal model may be understood as the model with the highest weight value corresponding to the prediction data among the preceding models, that is, the model with the most accurate fault prediction is selected.

In an embodiment, the preset ratio is 7:3.

### Embodiment two

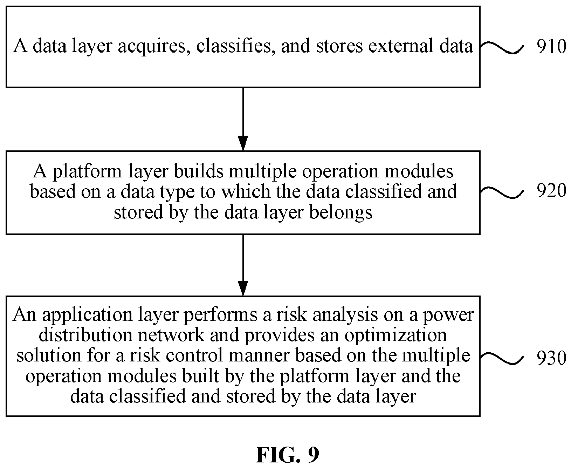

The present application further provides a power distribution network operation aided decision-making analysis method. As shown in FIG. 9, the method includes the steps described below.

In step 910, a data layer classifies and stores data acquired from external.

In step 920, a platform layer builds multiple operation modules according to data types of the data classified and stored by the data layer.

In step 930, an application layer performs a risk analysis on a power distribution network and provides an optimization solution for a risk control measure according to the multiple operation modules built by the platform layer and the data classified and stored by the data layer and displays operation result information of the multiple operation modules.

In an embodiment, the step in which the data layer classifies and stores the data acquired from external includes the steps described below.

The data layer acquires data from a PMS2.0, a power grid GIS platform, a marketing service application system, an electricity consumption information collection system, an equipment operation and maintenance lean management system, an OMS/SCADA system, and power distribution network automation.

The acquired data is integrated into operation data, archive data, ledger data, simulation data, and topology data according to the data type.

The acquired data is stored in data platforms corresponding to multiple data types according to the data type to which the data belongs, and the classified-and-integrated data is stored in a database.

In an embodiment, the step in which the platform layer builds multiple operation modules according to the data types of the data classified and stored by the data layer includes the steps described below.

The platform layer acquires data of the data layer and issues a data layer classification storage instruction based on a general data/service interface.

The platform layer builds an operation framework, an icon, and a data classification integration framework of the data layer for the application layer based on the data of the data layer.

The platform layer configures a permission of power grid equipment and a report of a topological structure of the power distribution network based on data classified and integrated by the data layer.

In an embodiment, the step in which the application layer performs a risk analysis on the power distribution network and provides an optimization solution for a risk control measure based on the multiple operation modules built by the platform layer and the data classified and stored by the data layer and displays operation result information of the multiple operation modules includes the steps described below.

Based on the ledger data, the topology data, and the operation data, the application layer scans risks and faults for the power distribution network, locks a risk target, and deduces the risk target.

A risk early warning and a corresponding risk control measure are provided based on the deduction result.

A risk prediction is performed based on the risk target and the optimization solution for the risk control measure is formulated.

Based on the risk control measure and the optimization solution for the risk control measure, with the smallest load loss as a goal, and with power grid operation safety and voltage quality as constraints, an evaluation is performed and all risk control measures and the optimization solution for the risk control measure are displayed.

The embodiments described above are part, not all, of embodiments of the present application. It should be understood by those skilled in the art that embodiments of the present application may be provided as methods, systems, and computer program products. Therefore, the present application may take the form of completely hardware embodiments, completely software embodiments, or a combination of software and hardware embodiments. Moreover, the present application may take the form of a computer program product implemented on one or more computer-usable storage media (including a disk memory, a compact disc read-only memory (CD-ROM), an optical memory, etc.) that include computer-usable program codes.

The present application is described with reference to flowcharts and/or block diagrams of methods, devices (systems), and computer program products according to embodiments of the present application. It should be understood that computer program instructions may implement each flow and/or block in the flowcharts and/or block diagrams and a combination of flows and/or blocks in the flowcharts and/or block diagrams. These computer program instructions may be provided for a processor of a general-purpose computer, a special-purpose computer, an embedded processor, or another programmable data processing device to produce a machine so that instructions, which are executed via the processor of the computer or another programmable data processing device, create a means for implementing the functions specified in one or more flows in the flowcharts and/or in one or more blocks in the block diagrams.

These computer program instructions may also be stored in a computer-readable memory which is able to direct a computer or another programmable data processing device to operate in a particular manner so that the instructions stored in the computer-readable memory produce an article of manufacture including instruction means which implement the functions specified in one or more flows in the flowcharts and/or in one or more blocks in the block diagrams.

These computer program instructions may also be loaded onto a computer or another programmable data processing device so that a series of operation steps are performed on the computer or another programmable device to produce processing implemented by a computer. Therefore, instructions executed on a computer or another programmable device provide steps for implementing the functions specified in one or more flows in the flowcharts and/or in one or more blocks in the block diagrams.

Compared with the related art, the present application has the beneficial effects described below.
1. The present application provides a power distribution network operation aided decision-making analysis system and method. A data layer is configured to classify and store acquired external data. A platform layer is configured to build multiple operation modules according to a data type to which the data classified and stored by the data layer belongs. An application layer is configured to perform a risk analysis on a power distribution network and provide an optimization solution for a risk control measure according to the multiple operation modules built by the platform layer and the data classified and stored by the data layer; and is further configured to display operation result information of the multiple operation modules and directly perform operation and maintenance of the power distribution network. In this manner, an intelligent power distribution network aided decision-making analysis is achieved, corresponding measures are proposed in a targeted manner, and the probability of occurrence of faults and risks of the power distribution network is reduced.
2. From the overall architecture design to the specific service function design, in this application, differentiated characteristics of an urban power distribution network are fully considered. Based on a distribution network big data platform and a GIS platform, an urban power distribution network operation simulation aided decision-making system integrated with functions such as an integrated data quality evaluation, a risk scanning analysis, a fault prediction, and network architecture optimization is built by using an advanced computer technology and a power distribution network operation simulation professional technology.
3. In a power distribution network operation aided decision-making analysis system provided in this application, a data management module acquires power-distribution-network-related data for multi-source data fusion and mining, analyzes and manages archive data, operation data, and topology data respectively, provides data support for the achievement of a fault prediction and risk scanning function, completes the configuration of a power distribution network operation simulation parameter, and achieves the construction of a power distribution network operation simulation model.
4. In the power distribution network operation aided decision-making analysis system provided in this application, a fault simulation module may present an overall indicator of power failure of the power distribution network, a fault area, and historical statistics and future trends of fault occurrences, achieve the accurate prediction of faults, complete fault simulation, deduce faults of the power distribution network, and provides a fault recovery solution.
5. In the power distribution network operation aided decision-making analysis system provided in this application, a network architecture optimization module achieves a transfer analysis, an unlooping analysis, and a reactive power optimization analysis, provides possible optimization solutions for the power grid network with different goals of the smallest grid loss, the smallest voltage deviation, and the smallest overall deviation, and achieves a visual presentation of each optimization solution.
6. In the power distribution network operation aided decision-making analysis system provided in this application, a monthly report analysis module achieves a summary of risk scanning, a fault prediction, and a network architecture health index and generation, editing, and printing of a report.
7. In the power distribution network operation aided decision-making analysis system provided in this application, the differentiated simulation evaluation analysis of the urban power distribution network is finally completed, the accurate positioning and classification of a risk area and a fault area of the power distribution network are achieved, the complex power distribution network architecture evolving and being restructured in the direction of high reliability and economic operation is supported, and customized operation and maintenance aided decision-making is provided for the urban power distribution network.
8. In the power distribution network operation aided decision-making analysis system provided in this application, a risk scanning module associates geographic information data and meteorological information data, completes the statistics of the risk trends of different risk types such as an overload risk, a heavy load risk, and an overvoltage risk of the power distribution network, performs a risk level evaluation and the risk degree rendered in a manner of a heat map, and achieves a visual presentation of a risk hotspot area.

## Claims

1. A power distribution network operation aided decision-making analysis system, comprising:
a data layer, configured to classify and store acquired data from external;
a platform layer, configured to build a plurality of operation modules according to data types of data classified and stored by the data layer; and
an application layer, configured to perform a risk analysis on a power distribution network and to provide an optimization solution for a risk control measure, according to the plurality of operation modules built by the platform layer and the data classified and stored by the data layer, and further configured to display operation result information of the plurality of operation modules.

2. The system of claim 1, wherein the data layer comprises an acquisition module, a data integration module, and a data storage module;
wherein the acquisition module is configured to acquire data of a power production management system 2.0, PMS2.0, a power grid geographic information system, GIS, platform, a marketing service application system, an electricity consumption information collection system, an equipment operation and maintenance lean management system, an outage manage system / supervision control and data acquisition, OMS/SCADA, system, and power distribution network automation;
the data integration module is configured to integrate the data acquired by the acquisition module into operation data, archive data, ledger data, simulation data, and topology data according to data types; and
the data storage module is configured to store the data acquired by the acquisition module in data platforms corresponding to a plurality of data types, according to data types of the data, and is further configured to store the data integrated by the data integration module according to the plurality of data types in a database.

3. The system of claim 2, wherein the data integration module is configured to:
integrate data of a marketing basic data platform, data of a massive data platform, and data of a power grid GIS platform into the operation data, the archive data, the ledger data, the simulation data, and the topology data,
wherein data acquired through the marketing service application system is stored in the marketing basic data platform; data acquired through the electricity consumption information collection system, data acquired through the equipment operation and maintenance lean management system, and data acquired through the OMS/SCADA system are stored in the massive data platform.

4. The system of claim 2, wherein the data storage module comprises a marketing service application system data storage unit, an electricity consumption information collection system data storage unit, an equipment operation and maintenance lean management system data storage unit, a power grid GIS platform data storage unit, and an OMS/SCADA system data storage unit,
the marketing service application system data storage unit is configured to update a user, a metering point, a metering attribute, and a metering box of the marketing service application system corresponding to the acquired data of the marketing service application system to a marketing basic data platform in real time through a Oracle Golden Gate, OGG, manner;
the electricity consumption information collection system data storage unit is configured to store a bottom indication of an electric energy meter and power amount data of the electricity consumption information collection system in a massive data platform through a standard interface manner of a massive platform;
the equipment operation and maintenance lean management system data storage unit is configured to store a standard code, an organization, an equipment archive and parameter, an archive relationship, a maintenance plan, and defect information of the equipment operation and maintenance lean management system in the massive data platform through a technical route of a data center;
the power grid GIS platform data storage unit is configured to store power grid spatial information service data of the power grid GIS platform in a power grid GIS data platform through a timed or instant manner; and
the OMS/SCADA system data storage unit is configured to convert data of the OMS/SCADA system into data in a common information model/exchange, CIM/E, file format, or data in an extensible markup language, XML, file format and store the data in the CIM/E file format or the data in the XML file format in the massive data platform.

5. The system of claim 4, wherein the OMS/SCADA system data storage unit is further configured to:
in a case where the OMS/SCADA system has newly added power grid structure data, convert the newly added data into a power grid structure file in the CIM/E file format or a power grid structure file in the XML file format; and
parse the newly added power grid structure file and store parsed data in the massive data platform.

6. The system of claim 4, wherein the data storage module further comprises an integrated data storage unit,
wherein the integrated data storage unit is configured to store the operation data, the archive data, the ledger data, the simulation data, and the topology data in the database.

7. The system of claim 2 or 6, wherein the database comprises an Oracle database, a db database, an SAL database, or an Acess database.

8. The system of claim 1, wherein the platform layer comprises: a general data/service interface module, an application platform operation module, and a development platform modeling tool module,
wherein the general data/service interface module is configured to acquire and store the data from a database according to data types and provide the data to the application platform operation module and the development platform modeling tool module through a service bus;
the application platform operation module is configured to provide an operation framework, an icon, a data classification integration framework of the data layer and instructions of the data layer for a plurality of models of the application layer; and
the development platform modeling tool module is configured to perform modeling, configuring a permission of a power grid equipment and defining a report of a topological structure of the power distribution network for the application layer, according to the data classified and stored by the data layer according to data types of the data.

9. The system of claim 8, wherein the general data/service interface module comprises an acquisition unit and a transmission unit,
wherein the acquisition unit is configured to acquire current up-to-date marketing data through a manner of database Java Database Connectivity, JDBC, to acquire a bottom indication of an electric energy meter and power amount data through a standard interface manner of a massive platform, to acquire power grid topology and equipment ledger information through an Extract-Transform-Load, ETL, manner, and to acquire data of a power grid GIS, data of an outage manage system / supervision control and data acquisition, OMS/SCADA, system, and data in the database; and
the transmission unit is configured to transmit data classification integration instructions of the application platform operation module to the data layer.

10. The system of claim 3, wherein the application layer comprises: a data management module, a risk scanning module, a fault simulation module, a network architecture optimization module, a system configuration module, and a monthly report analysis module; wherein,
the data management module is configured to analyze and manage the archive data, the operation data, and the topology data of the data integration module and provide a visual display of data of a topological structure of the power distribution network;
the risk scanning module is configured to scan risks and faults for the power distribution network according to the ledger data, the topology data, and the operation data of the data integration module, to lock a risk target, and to deduce the risk target; and the risk scanning module is further configured to provide a risk early warning and a risk control measure corresponding to the risk early warning;
the fault simulation module is configured to set a risk scanning range, a maintenance plan, meteorological information, a load parameter, and an equipment status according to the simulation data of the data integration module; and the fault simulation module is further configured to perform a risk prediction according to the risk target of the risk scanning module, to analyze a prediction result, and to formulate the optimization solution for the risk control measure;
the network architecture optimization module is configured to calculate and evaluate a risk measure of the risk scanning module and the optimization solution of the fault simulation module with a smallest load loss as a goal and with power grid operation safety and voltage quality as constraints;
the system configuration module is configured to configure a time interval for calculating risks of the power distribution network, a transformer, an upper limit and a lower limit of a line heavy load, and an upper voltage limit and a lower voltage limit corresponding to a plurality of voltage levels; and the system configuration module is further configured to set a component failure probability parameter, a power flow impact factor library, a meteorological impact factor, a geographic impact factor, a time impact factor, an equipment defect impact factor, an equipment age impact factor, a risk classification threshold value, and a risk measure; and
the monthly report analysis module is configured to, according to a result of the risk scanning module, a fault prediction module, and the network architecture optimization module and data of the data layer, complete querying, generating, and editing for a risk scanning monthly report, a fault prediction monthly report, and a network architecture optimization monthly report and complete online displaying in a hyper text markup language, HTML, importing, exporting, and automatically distributing via mail for the risk scanning monthly report, the fault prediction monthly report, and the network architecture optimization monthly report.

11. The system of claim 10, wherein the fault simulation module comprises a sample data unit, a prediction unit, and a selection unit,
wherein the sample data unit is configured to split fault data of the data layer into training data and prediction data according to a preset ratio;
the prediction unit is configured to train a random forest model, a neural network model, a support vector machine model, and an integrated learning model by using the training data, and to detect the random forest model, the neural network model, the support vector machine model, and the integrated learning model by using the prediction data; and
the selection unit is configured to select a model with a highest weight value corresponding to the prediction data among the random forest model, the neural network model, the support vector machine model, and the integrated learning model, to perform online prediction on faults of the power distribution network.

12. A power distribution network operation aided decision-making analysis method comprising:
classifying and storing, by a data layer, data acquired from external;
building, by a platform layer, a plurality of operation modules based on data types of the data classified and stored by the data layer; and
performing, by an application layer, a risk analysis on a power distribution network, providing an optimization solution for a risk control measure according to the plurality of operation modules built by the platform layer and the data classified and stored by the data layer, and displaying operation result information of the plurality of operation modules.

13. The method of claim 12, wherein classifying and storing, by a data layer, data acquired from external comprising:
acquiring data of a power production management system 2.0, PMS2.0, a power grid geographic information system, GIS, platform, a marketing service application system, an electricity consumption information collection system, an equipment operation and maintenance lean management system, an outage management system /supervision control and data acquisition, OMS/SCADA, system, and power distribution network automation;
integrating acquired data into operation data, archive data, ledger data, simulation data, and topology data according to data types; and
storing the acquired data in data platforms corresponding to a plurality of data types according to data types of the acquired data and storing classified-and-integrated data in a database.

14. The method of claim 12, wherein building, by the platform layer, the plurality of operation modules based on the data types of the data classified and stored by the data layer comprising:
acquiring, by the platform layer, data of the data layer and issuing, by the platform layer, a data layer classification storage instruction based on a general data/service interface;
building, by the platform layer, an operation framework, an icon, and a data classification integration framework of the data layer for the application layer based on the data of the data layer; and
configuring, by the platform layer, a permission of a power grid equipment and a report of a topological structure of the power distribution network based on data classified and integrated by the data layer.

15. The method of claim 13, wherein performing, by the application layer, the risk analysis on the power distribution network and providing, by the application layer, the optimization solution for the risk control measure according to the plurality of operation modules built by the platform layer and the data classified and stored by the data layer and displaying, by the application layer, the operation result information of the plurality of operation modules comprising:
scanning risks and faults for the power distribution network according to the ledger data, the topology data, and the operation data, locking a risk target, and deducing the risk target;
providing a risk early warning and a corresponding risk control measure based on the deduction result;
performing a risk prediction based on the risk target and formulating the optimization solution for the risk control measure; and
based on the risk control measure and the optimization solution for the risk control measure, with a smallest load loss as a goal, and with power grid operation safety and voltage quality as constraints, performing an evaluation and displaying all risk control measures and the optimization solution for the risk control measure.
